# EUROPÄISCHE PATENTSCHRIFT

(11) **EP 1 034 976 B1**
(45) Veröffentlichungstag und Bekanntmachung des Hinweises auf die Patenterteilung: **17.08.2005**
(21) Anmeldenummer: 00102511.3
(22) Anmeldetag: 05.02.2000
(51) Int. Cl.: B60N 2/44

(54) **Stütze für einen Fahrzeugsitz**
Support for vehicle seats
Appui pour sièges de véhicules

(30) Priorität: 08.03.1999 DE 19910082
(43) Veröffentlichungstag der Anmeldung: 13.09.2000
(73) Patentinhaber: DaimlerChrysler AG, 70567 Stuttgart (DE)
(72) Erfinder: Günther, Ewald, 71034 Böblingen (DE); Wynne-Jones, Timothy, Rickmansworth, Herts WD33EE (GB); Krist, Rudolf, 71636 Ludwigsburg (DE); Schmidt, Bernd, 72218 Wildberg (DE); Schrom, Ralf-Henning, 72108 Rottenburg (DE); Velimvassakis, Petros, 76227 Karlsruhe (DE)

(56) Entgegenhaltungen:
- EP-A- 0 229 737
- US-A- 4 722 550
- US-A- 5 707 109

## Beschreibung

Die Erfindung betrifft eine Stütze für einen Fahrzeugsitz mit den Merkmalen des Oberbegriffes des Anspruches 1. Die Erfindung betrifft außerdem einen Fahrzeugsitz, der mit einer derartigen Stütze ausgestattet ist.

Aus der EP 0 229 737 B1 ist eine Stütze der eingangs genannten Art bekannt, die an einem Tragrahmen eines Sitzes befestigt ist und dort ein seitliches Polster einer Sitzpolsterung unterstützt. Durch eine solche Stütze wird der Sitzkomfort des Sitzes verbessert. Darüber hinaus wird bei einer als Seitenstütze ausgebildeten Stütze, die ein Seitenpolster des Sitzes unterstützt, der seitliche Halt im Sitz für den jeweiligen Insassen verbessert, wodurch sich die Fahrzeugsicherheit erhöht.

Die bekannte Stütze weist außerdem eine an der Stütze gelenkig gelagerte Klappe sowie eine zwischen der Stütze und dieser Klappe angeordnete, an der Stütze befestigte, aufblasbare Kammer auf. Durch den Luftdruck in dieser Kammer läßt sich die Klappe betätigen, wodurch das sich an der Klappe abstützende Sitzpolster verstellbar ist. Mit Hilfe einer derartigen Polsterverstellung kann die Polsterung des Sitzes an die Bedürfnisse des jeweiligen Insassen angepaßt werden. Weitere Stützen sind aus den Dokumenten US 5 707 109 A oder US 4 722 550 A bekannt.

Die vorliegende Erfindung beschäftigt sich mit dem Problem, für eine Stütze und für einen Sitz der eingangs genannten Art eine besonders zweckmäßige Ausführungsform anzugeben.

Dieses Problem wird erfindungsgemäß durch eine Stütze mit den Merkmalen des Anspruches 1 gelöst. Durch die Verwendung der Stütze als Pneumatikdruckspeicher erhält die Stütze eine Doppelfunktion, die es ermöglicht, den von der Stütze im Sitz eingenommenen Raum sinnvoll für eine zusätzliche Anwendung auszunutzen. Durch den erfindungsgemäßen Vorschlag kann beispielsweise ein im Fahrzeug vorhandenes Pneumatiksystem um den erfindungsgemäßen Pneumatikdruckspeicher erweitert werden, so daß diesem Pneumatiksystem insgesamt ein größeres Speichervolumen zur Verfügung steht. Ebenso kann bei einem solchen Pneumatiksystem ein anderer Druckspeicher ersetzt oder verkleinert werden, so daß auch diesbezüglich eine Optimierung des Pneumatiksystems ermöglicht wird.

An den durch die Stütze gebildeten Pneumatikdruckspeicher können als Pneumatikverbraucher beispielsweise pneumatisch arbeitende Antriebselemente einer Zentralverriegelung des Fahrzeuges angeschlossen sein. Besonders vorteilhaft ist es, wenn der Sitz eine mittels aufblasbarer Kammern verstellbare Polsterung aufweist und diese Pneumatikverbraucher bildenden Kammern an den durch die Stütze gebildeten Pneumatikdruckspeicher angeschlossen sind. Auf diese Weise befinden sich Pneumatikverbraucher und Pneumatikdruckspeicher in örtlicher Nähe zueinander, so daß leckageanfällige, lange Schlauchleitungen mit komplizierter Schlauchführung entfallen können. Dieser Vorteil wird besonders deutlich, wenn an der erfindungsgemäßen Stütze selbst mindestens eine aufblasbare Kammer angebracht ist, die an den in die Stütze integrierten Pneumatikdruckspeicher angeschlossen ist und zur Verstellung des von der Stütze zu unterstützenden Polsters betätigbar ist.

Entsprechend einer bevorzugten Ausführungsform kann die erfindungsgemäße Stütze im Bereich einer Seitenlehne des Sitzes befestigbar sein und dort zur Unterstützung eines Seitenpolsters der Sitzpolsterung dienen. In diesem Bereich ist der durch die Stütze gebildete Pneumatikdruckspeicher crashgeschützt und kann beispielsweise auch sicherheitsrelevante Pneumatikverbraucher, wie z.B. eine pneumatisch betätigte Zentralverriegelung mit der erforderlichen Druckluft versorgen.

Das der Erfindung zugrundeliegende Problem wird auch durch einen Sitz mit den Merkmalen des Anspruches 6 gelöst, der durch die in die Stütze(n) integrierte Doppelfunktion eine kompakte Baugruppe bildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht auf eine erfindungsgemäße Stütze und
- Fig. 2: eine perspektivische Ansicht auf Tragelemente eines im übrigen nicht dargestellten Fahrzeugsitzes, der mit zwei Stützen gemäß Fig. 1 ausgestattet ist.

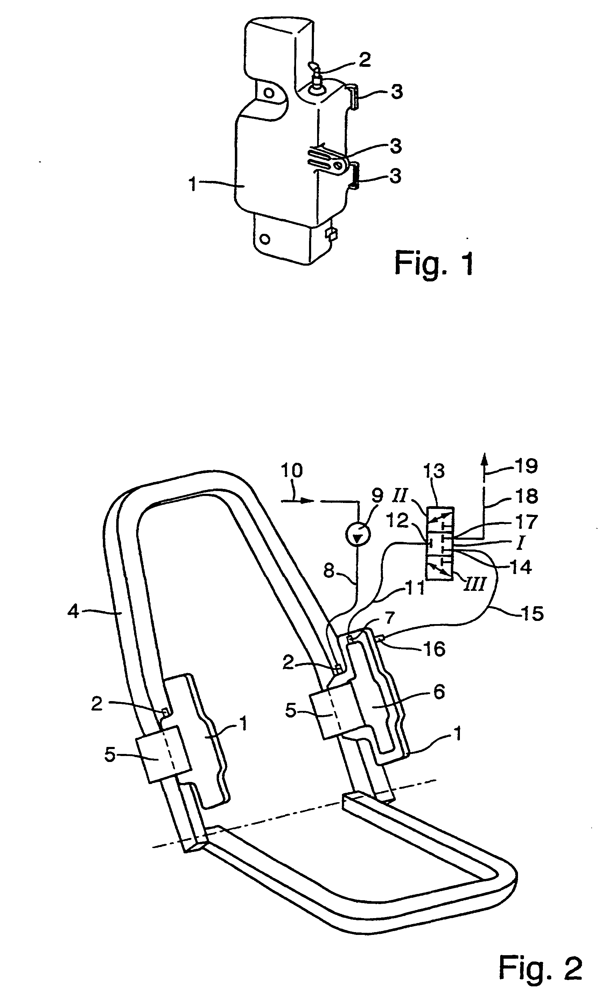

Entsprechend Fig. 1 weist eine erfindungsgemäße Stütze 1 eine an einem Sitz vorgegebene Einbaubedingungen angepaßte Außenkontur auf. Die Stütze 1 ist erfindungsgemäß als Hohlkörper ausgebildet, der so ausgestaltet ist, daß er als Pneumatikdruckquelle verwendbar ist. Zu diesem Zweck ist die Stütze 1 aus einem entsprechenden Werkstoff, z.B. Kunststoff, mit hinreichender Wandstärke und geeigneten Versteifungen hergestellt. Die Stütze 1 weist einen Anschlußstutzen 2 auf, über den eine Pneumatikdruckquelle und/oder ein Pneumatikverbraucher an den durch die Stütze 1 gebildeten Pneumatikdruckspeicher anschließbar ist. Zweckmäßigerweise sind an die Stütze 1 Befestigungselemente 3 angeformt.

Entsprechend Fig. 2 kann die Stütze 1 als Seitenstütze ausgebildet sein. Zwei derartige Seitenstützen 1 sind gemäß Fig. 2 an einem Rückenlehnentragrahmen 4 eines im übrigen nicht dargestellten Fahrzeugsitzes befestigt. Die Seitenstützen 1 sind dabei einander gegenüberliegend, zueinander symmetrisch jeweils im Bereich eines nicht dargestellten Seitenpolsters des Fahrzeugsitzes untergebracht und bewirken dadurch eine seitliche Unterstützung dieser Polster. Die Seitenstützen 1 sind beispielsweise mit Halteplatten 5 am Rückenlehnentragrahmen 4 befestigt, insbesondere angeschraubt. An einer dem zu unterstützenden Polster zugewandten Außenseite der Stütze 1 ist eine aufblasbare Kammer 6 angebracht, die in Abhängigkeit ihrer Befüllung bzw. des darin herrschenden Luftdruckes ihr Volumen ändert und so eine Verstellung des von der Stütze 1 unterstützten Polsters ermöglicht. Die Kammer 6 weist dazu einen Anschlußstutzen 7 auf, durch den die Kammer 6 aufblasbar ist bzw. durch den die in der Kammer 6 enthaltende Luft aus der Kammer 6 entweichen kann.

Gemäß Fig. 2 ist der durch die Stütze 1 gebildete Pneumatikdruckspeicher mit seinem Anschlußstutzen 2 über einen Schlauch 8 an die Druckseite einer als Pneumatikdruckquelle dienenden Luftpumpe 9 angeschlossen, die saugseitig Luft aus der Umgebung ansaugt, was durch einen Pfeil 10 symbolisiert ist. Der Anschlußstutzen 7 der Kammer 6 ist über einen Schlauch 11 an einen ersten Anschluß 12 eines Ventils 13 angeschlossen. Ein zweiter Anschluß 14 dieses Ventils 13 kommuniziert über einen Schlauch 15 mit einem weiteren Anschlußstutzen 16 des in die Stütze 1 integrierten Pneumatikdruckspeichers. Ein dritter Anschluß 17 des Ventils 13 kommuniziert über eine Leitung 18 mit der Umgebung, was durch einen Pfeil 19 symbolisiert ist.

Anstelle der gemäß Fig. 2 mit zwei Anschlußstutzen 2 und 16 ausgestatteten Stütze 1 kann auch ein einziger Anschluß an den in der Stütze 1 ausgebildeten Pneumatikdruckspeicher ausreichen, sofern eine entsprechende Pneumatikschaltung verwendet wird. Die hier dargestellte Pneumatikschaltung dient lediglich zur vereinfachten Erläuterung der Funktionsweise einer bevorzugten Ausführungsform.

Das Ventil 13 ist durch einen Fahrzeuginsassen, das heißt durch einen Benutzer des mit der erfindungsgemäßen Stütze 1 ausgestatteten Fahrzeugsitzes betätigbar. In der in Fig. 2 dargestellten, mit I bezeichneten Mittelstellung des Ventils 13 sind die drei Anschlüsse 12, 14, 17 des Ventils 13 gesperrt, so daß weder aus der Kammer 6 noch aus dem Pneumatikdruckspeicher Luft entweichen kann. Wird das Ventil 13 entsprechend Fig. 2 nach unten in eine mit II gekennzeichnete zweite Schaltstellung verstellt, sind die Anschlüsse 12 und 17 des Ventils 13 miteinander verbunden, während der Anschluß 14 gesperrt ist, so daß die Kammer 6 mit der Umgebung kommunizieren kann, wodurch die in der Kammer 6 enthaltene Luft in die Umgebung austritt. Auf diese Weise verstellt sich das von der Stütze 1 zu unterstützende Polster auf die Stütze 1 zu. Wenn das Ventil 13 gemäß Fig. 2 nach oben in eine mit III gekennzeichnete dritte Schaltstellung verstellt wird, sind die Anschlüsse 12 und 14 des Ventils 13 miteinander verbunden und der Anschluß 17 ist gesperrt, so daß der Pneumatikdruckspeicher mit der Kammer 6 kommunizieren kann. Sofern im Pneumatikdruckspeicher ein hinreichend großer Luftdruck herrscht, strömt dann Luft vom Pneumatikdruckspeicher in die Kammer 6 und bläst diese auf. Dadurch wird das von der Stütze 1 unterstützte Seitenpolster von der Stütze 1 wegverstellt.

Über die Pumpe 9 wird der Pneumatikdruckspeicher getaktet oder bedarfsabhängig befüllt. Vorzugsweise ist in den Anschlußstutzen 2 ein entsprechend orientiertes Rückschlagventil integriert.

## Patentansprüche

1. Stütze für einen Fahrzeugsitz, die an einem Tragelement (4) des Sitzes befestigbar ist und zur Unterstützung eines Polsters einer Sitzpolsterung dient,
**dadurch gekennzeichnet,**
**daß** die Stütze (1) einen Hohlkörper bildet, der als Pneumatikdruckspeicher ausgebildet ist, an den eine Pneumatikdruckquelle (9) sowie wenigstens ein Pneumatikverbraucher (6) anschließbar sind.

2. Stütze nach Anspruch 1,
**dadurch gekennzeichnet,**
**daß** die Stütze (1) im Bereich einer Seitenlehne des Sitzes befestigbar ist und dort zur Unterstützung eines Seitenpolsters der Sitzpolsterung dient.

3. Stütze nach Anspruch 1 oder 2,
**dadurch gekennzeichnet,**
**daß** die Stütze (1) an einem Rückenlehnentragrahmen (4) des Sitzes befestigbar ist.

4. Stütze nach einem der Ansprüche 1 bis 3,
**dadurch gekennzeichnet,**
**daß** an der Stütze (1) mindestens eine aufblasbare Kammer (6) angebracht ist, die an den durch die Stütze (1) gebildeten Pneumatikdruckspeicher angeschlossen ist und zur Verstellung des zu unterstützenden Polsters betätigbar ist.

5. Stütze nach einem der Ansprüche 1 bis 4,
**dadurch gekennzeichnet,**
**daß** die Stütze (1) aus Kunststoff hergestellt ist.

6. Sitz für ein Kraftfahrzeug, mit einer Polsterung, bei der wenigstens ein Polster, z.B. ein Seitenpolster, von einer Stütze (1) unterstützt ist, die an einem Tragelement (4), z.B. an einen Rückenlehnentragrahmen, befestigt ist,
**dadurch gekennzeichnet,**
**daß** die Stütze (1) nach einem der Ansprüche 1 bis 5 ausgestaltet ist.

## Claims

1. Support for a vehicle seat which can be fixedly secured to a suspension element (4) of the seat and serves to support a padding of a seat cushion,
**characterised in that**
the support (1) forms a hollow body which is formed as a pneumatic pressure storage member, to which a pneumatic pressure source (9) and at least one pneumatic consumption member (6) can be connected.

2. Support according to Claim 1,
**characterised in that**
the support (1) can be fixedly secured in the region of a side rest of the seat and serves here to support a side padding of the seat cushion.

3. Support according to Claim 1 or 2,
**characterised in that** the support (1) can be fixedly secured to a back rest support frame of the seat.

4. Support according to one of the Claims 1 to 3,
**characterised in that**
at least one inflatable chamber (6) is arranged on the support, said inflatable chamber (6) being connected to the pneumatic pressure storage member formed by the support (1) and being capable of being activated to displace the padding to be supported.

5. Support according to one of the Claims 1 to 4,
**characterised in that**
the support (1) is made of plastic.

6. Seat for a motor vehicle having a cushion, in which at least one padding e.g. a side padding, is supported by a support (1) which is fixedly secured to a suspension element (4), e.g. to a seat back support frame,
**characterised in that**
the support (1) is formed according to one of the Claims 1 to 5.

## Revendications

1. Appui pour un siège de véhicule, qui peut être fixé sur un élément porteur (4) du siège et sert au soutien d'un rembourrage de siège,
**caractérisé en ce que**
l'appui (1) forme un corps creux qui est conçu comme un accumulateur de pression pneumatique, auquel peuvent être raccordés une source de pression pneumatique (9) et au moins un consommateur pneumatique (6).

2. Appui selon la revendication 1,
**caractérisé en ce que**
l'appui (1) peut être fixé dans la zone d'un dossier du siège et sert à cet endroit au soutien d'un coussin latéral du rembourrage de siège.

3. Appui selon la revendication 1 ou 2,
**caractérisé en ce que**
l'appui peut être fixé sur un cadre porteur du dossier (4) du siège.

4. Appui selon l'une quelconque des revendications 1 à 3,
**caractérisé en ce que**
sur l'appui (1) est placée au moins une chambre (6) gonflable, qui est raccordée à l'accumulateur de pression pneumatique formé par l'appui (1) et peut être actionnée pour le réglage du coussin à soutenir.

5. Appui selon l'une quelconque des revendications 1 à 4,
**caractérisé en ce que**
l'appui (1) est fabriqué à base de matière synthétique.

6. Siège pour un véhicule automobile, avec un rembourrage, sur lequel au moins un coussin, par exemple un coussin latéral, est soutenu par un appui (1), qui est fixé sur un élément porteur (4), par exemple sur un cadre porteur de dossier,
**caractérisé en ce que**
l'appui (1) est conçu selon l'une quelconque des revendications 1 à 5.
